# EUROPEAN PATENT APPLICATION

(11) **EP 1 214 957 A1**
(43) Date of publication of application: **19.06.2002**
(21) Application number: 00127428.1
(22) Date of filing: 14.12.2000
(51) Int. Cl.: A63B 69/16, A63B 21/00, A63F 13/06

(54) **Computer-television game and body-building system**

(71) Applicant: WHIRLPOOL CORPORATION, Benton Harbor Michigan 49022 (US)
(72) Inventor: Bergonzini, Daniela, 21025 Comerio (IT); Laitinen, Mika, 21025 Comerio (IT); Scorziello, Laura, 21025 Comerio (IT); Unger, Axel, 21025 Comerio (IT); Sanna, Salvatore, 21025 Comerio (IT)
(74) Representative: Guerci, Alessandro

(57) **Abstract**

A computer-television game and body-building system comprises a stationary exercise apparatus (16) linked to a controlling unit of a computer or game machine through an interface equipment. The stationary exercise apparatus comprises a support frame (18) for use with a conventional bicycle. The interface equipment has a rotating element (30) driven by the front wheel of the bicycle through rotation of its handlebar and a steering sensor associated with the rotating element (30) and suitable to provide the controlling unit with a signal indicative of the steering angle of the bicycle handlebar.

## Description

The present invention relates to a computer-television game and bodybuilding system comprising a stationary exercise apparatus connected to a computer or game machine through interface equipment. These systems are known from CN-A-1086454 and CN-A-1209595.

CN-A-1086454 discloses a health care video game that extracts data on body building machine use and measures and displays energy consumption during exercise. CN-A-1209595 discloses a general computer-television game and bodybuilding system that uses intelligent interface equipment.

The above systems need quite sophisticated fitness machines, which can be used in a stationary condition only.

One of the fitness machines that are considered most beneficial for the user is the so-called cycle exerciser. i.e. a stationary exercise machine having a frame, a seat, a fixed handlebar and a pedal assembly. Such machine comprises a device for offering a predetermined resistance to the rotation of the pedal assembly, connected to an electronic unit that monitors the load and shows different parameters to the user on a display (heart rate or other physiological parameters, physical effort exerted, energy consumption, virtual speed, virtual kilometers etc.). These known cycle exercisers, in addition to their high cost, do not offer much fun to the users since this kind of physical exercise is repetitive and monotonous.

A partial solution to this problem has been suggested by EP-A-736311 which discloses a fitness machine for cycle training which makes use of a conventional bicycle and which comprises display means connected to control means and designed to provide data relating to the physiological functions of the user. Even if it discloses that the display means could show the position of the user in relation to a group of cyclists on a track, the specification is silent as far as the way to detect the movements of the handlebar is concerned. As a matter of fact, the fork arms of the conventional bike used in EP-A-736311 are fixed to the support structure and the user cannot move the handlebar. Piezoelectric or capacitive sensors or load cells are shown inside a block fitted coaxially to the pin used for connecting the fork arms to the support structure, but since the pin is fixed to such structure, no rotation of the steering is allowed. Therefore the user cannot have a good "feeling" of steering, since the handlebar cannot rotate and only the force exerted by the user on the handlebar can be detected. Another disadvantage of the fitness machine according to EP-A-736311 is that the user has to remove the front wheel of the bicycle before mounting it on the support structure, therefore increasing the time for getting started with the physical training.

An object of the present invention is to provide a computer-television game and bodybuilding system without the above-mentioned drawbacks, which is simple and easy to install and use.

To that end, the system according to the invention comprises a support frame for use with a conventional bicycle. The system further comprises an interface equipment having a rotating element suitable to be driven by the front wheel through rotation of the handlebar and a steering sensor linked to said rotating element and suitable to provide the controlling unit of the system with a signal indicative of the steering angle of the bicycle. The interface comprises also speed sensor through the pedals and brake sensor to give input to a gaming software connected to the interface. These inputs are elaborated by software in order to control the race in the game. Besides, software provides outputs to give feed back to the user on the bicycle through vibration on the wheels and resistance with a resistance unit interacting with the drive wheel of the bicycle.

In this way, it is achieved that the user can quickly convert a conventional bicycle to a fitness machine without the need of taking out the front wheel. Moreover the presence of the rotating element linked to the steering sensor allows to interact in a better way with a video game, if compared for instance with the solution disclosed in EP-A-736311.

The system can be linked to a PC or to various computer gaming platforms (Sony Playstation 2, Macintosh, Nintendo, Sega etc.). The user drives the actions of the video games through his/her physical effort by pedaling, steering, braking.The system can further give feedback to the user in form of resistance, motion, sound and visuals depending on the user action in playing the game.

The main advantage of the present invention is that a normal bicycle, normally used to go on the street can be easily and quickly transformed into a fitness machine coupled to a PC game or a video game. This is performed by few simple sensors that can be also applied by the client / user on the bicycle, such sensors being easily connected by wires or wireless to the electronic control system.

In a preferred embodiment of the system according to the invention, the interface equipment comprises a speed sensor connected to the pedals. Besides, there is a steering sensor that controls the steering motion of the game software, and a
sensor suitable to provide a signal indicative of the position of at least one brake lever of the bicycle.

All the three above mentioned sensors (steering, pedals/speed, brake) are preferably connected wirelessly to the controlling unit so that, when the conventional bicycle has to be used on the road, the user has no need to disconnect any electrical connection.

Also the outputs from the software are provided wirelessly to the actuators on the bicycle to give users feedback on the race in terms of vibrations and resistance on the wheels.

In the following example, we will disclose a frame to be used with user's conventional bicycle. According to another embodiment of the invention, a stationary bike can be used, to which the interface equipment explained above is added, to let the stationary bike interact with the game running on a game platform.

Another embodiment of the invention comprises a self standing unit in which fitness machine, monitor, interface equipment, game software and internet connection are integrated.

These and other aspects of the invention are apparent from and will be elucidated, by way of a non-limitative example, with reference to the embodiments described hereinafter, in which:
- figure 1 is a perspective overall view of the computer-television game and body-building system according to the present invention;
- figure 2 is a perspective view of a bicycle training apparatus used in the system according to the present invention;
- figure 3 is a perspective view of the support frame used in the system of figure 2;
- figure 4 is a top view of the support frame of figure 3;
- figure 5 is a front view of the support frame of figure 3;
- figure 6 is a schematic view of the electric diagram of the system according to the invention; and
- figure 7 is a block diagram of different options for interfacing the system with a PC, videogame machine or Internet.

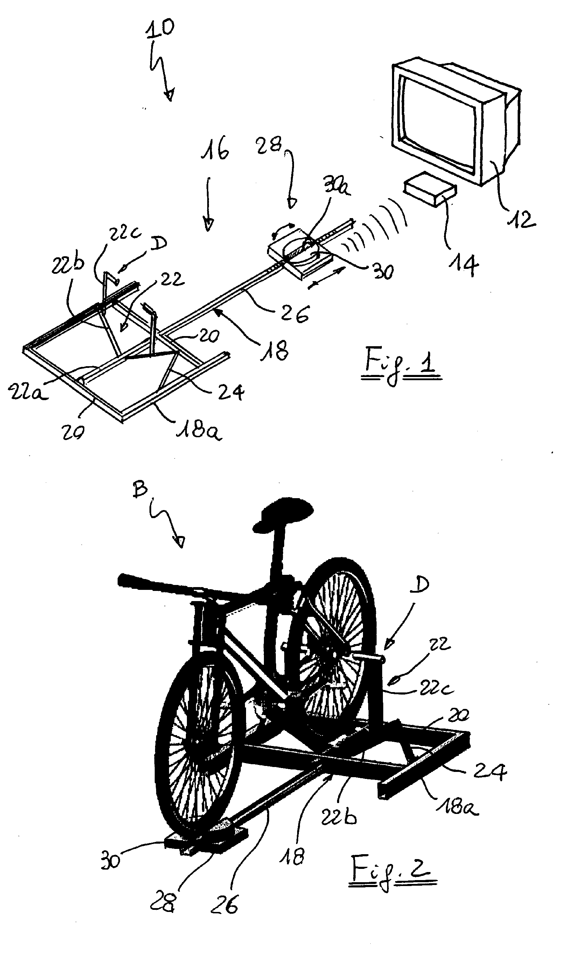

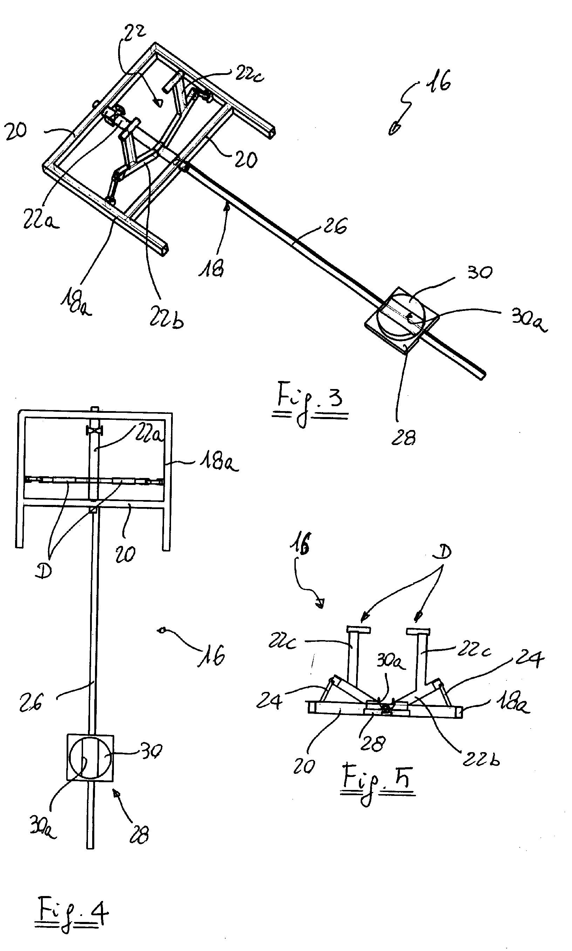

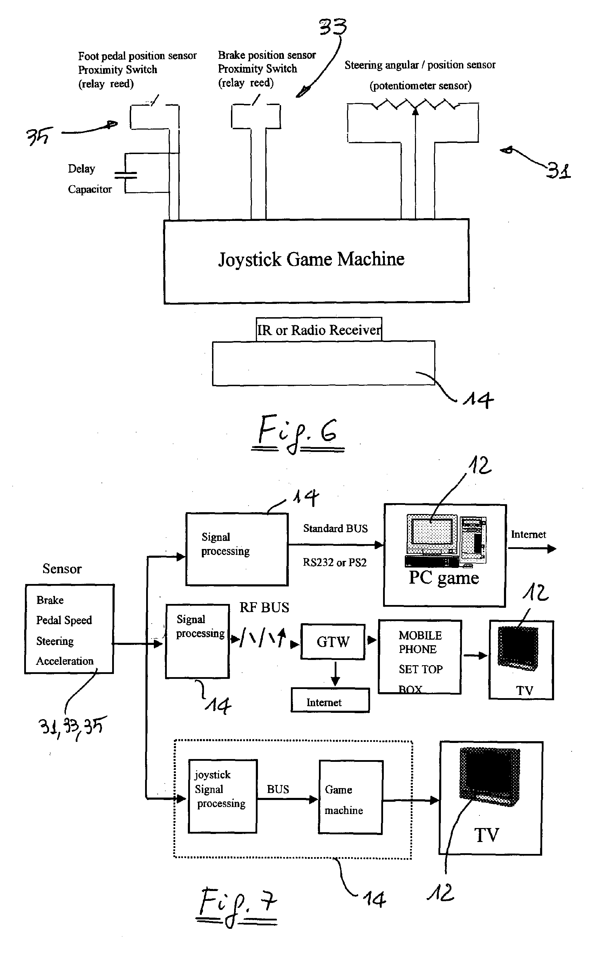

Turning now to the drawings, the computer-television game and bodybuilding system according to the present invention is generally designated by the numeral 10. The system 10 comprises a monitor 12 connected to a central control unit 14 which is placed in front of a bicycle training apparatus 16. Such apparatus comprises a support frame 18 comprising a rear frame member 18a having two transverse elements 20. To these latter an oscillating support 22 is rotatably mounted, so that it is transversely pivotal about a longitudinal axis. The oscillating support 22 comprises an axle 22a and a V-shaped base element 22b having two vertical frame elements 22c to which the rear axle of a conventional bicycle B has to be mounted by means of devices D well known in the art, for instance from WO 89/01806. The pivotal movement of oscillating support 22 is resisted by opposed strut assemblies 24, which in a preferred embodiment include "shock absorber" elements (not shown) including compression springs and hydraulic or compressed gas cylinders. Such shock absorber elements will retract and extend to provide predetermined resistance to a limited range of angular side-to-side motion of the bicycle B induced by the user.

To the rear frame member 18a of the support frame 18, a longitudinal frame member 26 is fixed which is aligned with the rotational axis of the oscillating support 22. A front wheel base element 28 is slidably mounted on the longitudinal frame member 26, means being provided for fixing the base element 28 in the desired position for fitting different wheel base dimension of the bicycle B.

On the front wheel base element 28, a support disc 30, having a groove 30a for the tire of the front wheel, is rotatably mounted so that to a rotation of the handlebar corresponds a rotation of the support disc 30. Between the base element 28 and the support disc 30 a steering sensor 31 (figure 6) is mounted. The angular sensor for steering position can be chosen among several types of sensors, for instance potentiometers, encoders, rotary inductive sensors, giant magneto resistance (GMR) sensors, Hall effect angle sensors. The preferred sensor 31 is a potentiometer.

The oscillating support 22 is provided with a conventional electrical resistance device (not shown) which provides the control unit 14 with a signal indicative of the energy expended by the user. The electrical resistance device may include an AC induction motor which is mounted on the support 22 adjacent the rear wheel of the bicycle B. As it is usual for conventional cycle training devices, the motor has a roller supported at the end of the shaft and engaging the rear wheel of the bicycle.

According to the present invention, the electrical resistance device is driven by the central control unit 14 and can change its resistance according to requirements of the game. A further sensor (not shown) can be used for sensing the pivotal movement of the oscillating support 22, such sensor providing the control unit 14 with a signal indicative of the side movement of the bicycle B.

With a system as the one up to now described, the user has only to install a normal bicycle B (tour bike, race, bike, mountain bike etc.) on the support frame 18 by acting on the fixing device D only, and the bike becomes immediately a component of the computer-television game and body-building system 10 according to the present invention. The data transmission between the steering sensor 31 and the acceleration sensor, on one side, and the control unit 14, on the other side, is preferably wireless, based for instance on infrared (IR) technology, low-power radio frequency (RF) communication technology (with a usual frequency of 433MHz an a power of 10mW), "bluetooth" technology used presently for replacing all of the mouse cables, keyboard cables, sync ports on palm pilots with a transparent wireless radio link that automatically connects when devices come into close proximity with other bluetooth capable devices. The steering sensor 31 transmits information to the control unit 14 of the video game or computer, while the resistance roller not only measures the energy expended by the user, but also adjusts resistance according to input from video game.

According to the invention, the system can have other sensors placed, in this case, directly on the bicycle, namely a brake lever sensor 33 and a pedal assembly sensor 35 (figure 6).

The brake lever sensor 33 measures braking (i.e. degree of rotation of one or both brake levers) and transmits information to the central unit 14. The pedal assembly sensor 35 measures the pedal position and/or the rotational speed of the speed assembly, for providing the central unit with a signal indicative of the gear used and of the "virtual" speed of the bicycle. The above sensors can be limit switches contactless sensors, proximity relay reeds, inductive position and displacement sensors, capacitive position and displacement sensor, photoelectric displacement and proximity sensors. For the pedal assembly, a proximity switch is preferred and the sensor can be assembled on the bicycled according to the following method. The probe (part of the sensor with the cable or with the wireless transmission device) is assembled on the fixed bicycle part (for instance the frame), while the target has to be fixed on the mobile bicycle part (the pedal).

The information from both the above sensors is preferably transmitted wirelessly to the central unit 14 so that the user can leave the sensors on the bike when he uses it "on the road".

The system according to the invention can be also linked with a gate way or with an Internet, as shown in figure 7.

## Claims

1. Computer-television game and body-building system (10) comprising a stationary exercise apparatus (16) linked to a controlling unit (14) of a computer or game machine through an interface equipment, **characterized in that** the stationary exercise apparatus comprises a support frame (18) for use with a conventional bicycle (B), the interface equipment comprising a rotating element (30) driven by the front wheel of the bicycle (B) through rotation of its handlebar and a steering sensor (31) associated with the rotating element (30) and suitable to provide the controlling unit (14) with a signal indicative of the steering angle of the bicycle handlebar.

2. Computer-television game and body-building system according to claim 1, **characterized in that** the interface equipment comprises a first auxiliary sensor (35) for providing the control unit (14) with a signal indicative of the rotating speed and/or position of the pedals of the bicycle (B).

3. Computer-television game and body-building system according to claim 1, **characterized in that** the interface equipment comprises a second auxiliary sensor (33) for providing the controlling unit with a signal indicative of the position of at least one brake lever of the bicycle (B).

4. Computer-television game and body-building system according to claim 1, including a resistance unit interacting with the drive wheel of the bicycle (B), **characterized in that** the interface equipment is suitable to provide the controlling unit (14) with a feedback signal in order to vary the resistance according to game requirements.

5. Computer-television game and body-building system according to claims 2 and 3, **characterized in that** both first and second auxiliary sensors (35, 33) are connected wirelessly to the controlling unit (14).

6. Computer-television game and body-building system according to claim 1, in which the support frame (18) comprises a base member (18a) having a support member (22) for connecting the rear axle of the bicycle (B), **characterized in that** the base member (18a) comprises a longitudinal frame member (26) supporting a rotating base element (28, 30) having a longitudinal slot (30a) suitable to hold the tire of the front wheel of the bicycle (B).

7. Computer-television game and body-building system according to claim 6, **characterized in that** said rotating base element (28, 30) is suitable to slide on the longitudinal frame member (26) in order to accommodate bicycles of different wheelbase.

8. Computer-television game and body-building system according to claim 1 in which the support frame (18) comprises a base member (18a) having a support member (22) for connecting the rear axle of the bicycle (B), **characterized in that** said support member (22) is pivotally mounted on the support frame (18, 18a) to provide limited pivotal movement of the rear wheel and bicycle (B) about a longitudinal axis, said interface equipment comprising a further auxiliary sensor suitable to provide the controlling unit (14) with a signal indicative of the side movement of the bicycle (B).

9. Computer-television game and body-building system comprising a stationary exercise apparatus including rotating pedals and linked to a controlling unit (14) of a computer or game machine through an interface equipment, **characterized in that** the stationary exercise apparatus comprises a handlebar, the interface equipment comprising a rotating element driven by the handlebar and a steering sensor associated with the rotating element and suitable to provide the controlling unit (14) with a signal indicative of the steering angle of the handlebar.

10. Computer-television game and bodybuilding system according to claim 9, **characterized in that** the interface equipment comprises a first auxiliary sensor for providing the control unit with a signal indicative of the rotating speed and/or position of the pedals.
